# EUROPEAN PATENT APPLICATION

(11) **EP 1 145 887 A2**
(43) Date of publication of application: **17.10.2001**
(21) Application number: 01201202.7
(22) Date of filing: 02.04.2001
(51) Int. Cl.: B60J 7/02

(54) **Open roof construction for a vehicle**

(30) Priority: 14.04.2000 NL 1014953
(71) Applicant: Inalfa Industries B.V., 5804 AB Venray (NL)
(72) Inventor: Teunissen, Renatus Arnoldus, 5845 CW St. Antonis (NL); Torbal, De, René, Fernand, Emile, 5644 GA Eindhoven (NL); Hermsen, Jacobus, Christian, Leonardus, 5804 AT Venray (NL)
(74) Representative: Metman, Karel Johannes

(57) **Abstract**

An open roof construction for a vehicle having an opening (2) in its fixed roof (1), comprising a stationary part (3,6) to be fixed to the roof. A closure means (9) supported by the stationary part is slidably guided by means of sliding shoes (11,111,211) at the side edges with respect to guideways (10,110,210) on the stationary part (3,6). The guideways (10,110,210) are formed of a metal or the like, such as aluminium, which includes sliding surfaces of plastic material.

The guideways (10,110,210) may consist of guide grooves, whose bottom is curved, seen in cross-sectional view, whilst the sliding shoes (11) exhibit a curvature adapted thereto on the side that faces towards the bottom of the associated guide groove, seen in cross-sectional view.

The sliding shoes (11) and the guideways (10,110,210) can be formed in such a manner that they are in form-locked engagement with each other within the normal range of movement, and that they can be moved into and out of engagement with each other outside the normal range of movement.

## Description

The invention relates to an open roof construction in accordance with the preamble of claim 1.

Such open roof constructions are known in many versions thereof. In particular in the case of open roof constructions wherein the lower closure means is a sun screen, guide constructions comprising guideways and sliding shoes are generally used. In most cases, said guideways are in the form of guide grooves which are open in the direction of the sun screen, into which the sliding shoes of the sun screen extend in horizontal direction. The guideways for the sun screen form part of lateral guide rails, which also function to support and guide the operating mechanisms for the upper closure means. Said guide rails are generally made of aluminium, with the guide grooves for the sun screen being anodized, for example, with a view to performing their guiding function.

Many designs are aimed at improving the cooperation between the sliding shoes and the associated guideways in order to achieve a desired and even sliding force and to prevent play, which may cause rattling noises. To this end all kinds of spring structures have been developed, which are to urge the sliding shoes against the guideways with a certain bias.

The object of the invention is to provide a new open roof construction of the kind referred to in the introduction.

According to one aspect of the invention, the open roof construction is characterized by the aspects defined in claim 1. Advantageous embodiments of the open roof construction according to the invention constitute the subject matter of the dependent claims.

By fitting the metal guideway with sliding surfaces of plastic material, a more adequately stabilized friction force on the closure means can be achieved, which friction force is furthermore constant along the length of the guideways. In particular in the case of manually operated closure meanss, such as sun screens, this imparts a sensation of quality when operating the element, whilst also the sound of the sliding sun screen can be more or less pleasant.

According to another aspect of the invention, the sliding shoes and the guideways are formed in such a manner that they are in form-locked engagement with each other within the normal range of movement of the sliding shoes, and that they can be moved into and out of engagement with each other outside the normal range of movement of the sliding shoes.

As a result of the above aspects, the sliding shoes are retained with respect to the guideways in all directions except the sliding direction, so that rattling will occur less easily and the sliding shoes will not accidentally become detached from the guideways.

According to another aspect of the invention, at least the bottom of the guideways of the stationary part, which are in the form of guide grooves, is curved when seen in cross-sectional view, whilst the sliding shoes exhibit a curvature adapted thereto on the side that faces towards the bottom of the associated guide groove, seen in cross-sectional view.

This aspect causes the sliding shoes to be centered in the guide grooves, thus preventing the occurrence of play in a direction transversely to the guide grooves.

The invention will now be explained in more detail with reference to the drawings, which schematically show exemplary embodiments of the invention.

Fig. 1 is a very schematic top plan view of a vehicle roof fitted with the embodiment of the open roof construction according to the invention.

Fig. 2 is a perspective view of a part of a guide rail of the open roof construction of Fig. 1, in which a sliding shoe for the sun screen of the open roof construction according to Fig. 1 is present.

Fig. 3 is a larger-scale, cross-sectional view of the guide rail of Fig. 2.

Fig. 4 is a larger-scale view of detail IV in Fig. 3.

Fig. 5 is a very schematic, perspective view of a part of an alternative embodiment of a guide rail of the open roof construction according to the invention, which comprises a sliding shoe for a sun screen.

Fig. 6 is a cross-sectional view corresponding to Fig. 3 of another embodiment of the open roof construction according to the invention.

Fig. 7 is a larger-scale, perspective view of a part of yet another embodiment of an open roof construction according to the invention, which shows a part of a guide rail and the sun screen.

Comparable parts of the various embodiments are indicated by the same numerals in the figures, respectively preceded by a different multiple of one hundred.

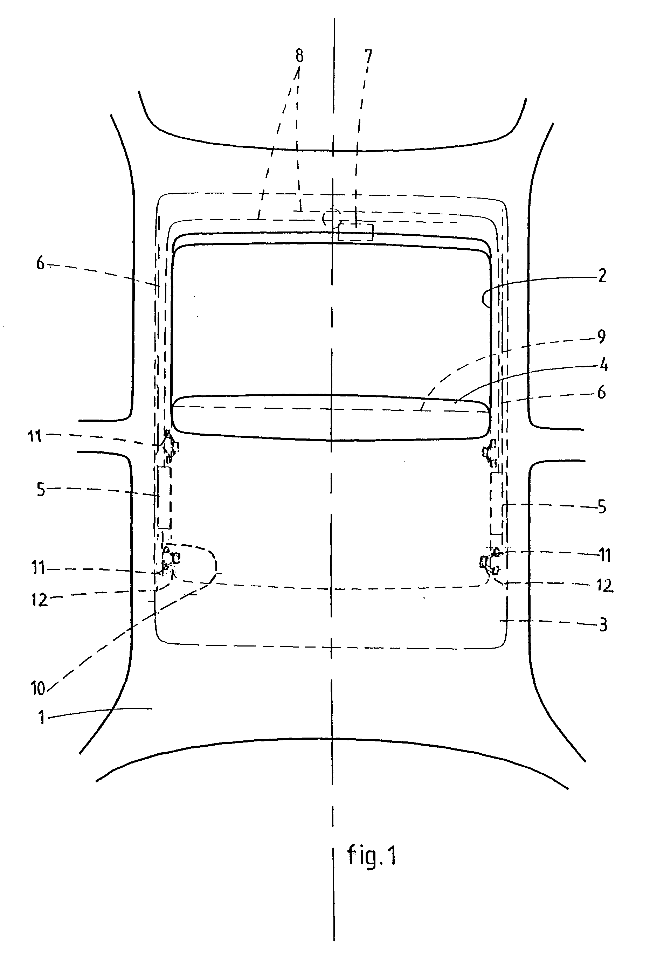

Fig. 1 shows the fixed roof 1 of a motor vehicle, in this case a passenger car. Said fixed roof 1 is provided with an at least substantially rectangular roof opening 2 for the purpose of mounting an open roof construction therein. The open roof construction comprises a stationary part, in this case a frame 3, which is fixed to the underside of the fixed roof 1 of the vehicle.

In the illustrated embodiment the open roof construction is a so-called sliding roof or sliding-tilt roof, which comprises a more or less rigid, preferably transparent panel 4 in this embodiment, which panel is capable of selectively closing the roof opening 2 or releasing it to a greater or lesser extent. Panel 4 is to this end laterally supported by operating mechanisms 5, which are slidably accommodated in guide rails 6 which are mounted on frame 3 or which form part thereof, and which extend in longitudinal direction, parallel to each other, on either side of roof opening 2 and rearwards thereof. Said operating mechanisms 5 can be moved synchronously in guide rails 6 and thus move the panel not only in longitudinal direction but also in vertical direction. To this end the operating mechanisms 5 are actuated from a driving device 7, such as an electric motor, for example via pull-push cables 8.

Besides panel 4, the open roof construction also comprises a lower closure means, in this case in the form of a sun screen 9, which is slidably guided with its side edges with respect to guideways 10 of guide rails 6. Sun screen 9 can be moved forward and rearward, for example manually or automatically, or be moved along with panel 4. In this first embodiment the guideways 10 are in the form of guide grooves.

Sun screen 9 is fitted with a number of sliding shoes 11, four sliding shoes 11 on each side edge of the sun screen in this embodiment, in order to enable sliding movement of sun screen 9 in guide grooves 10.

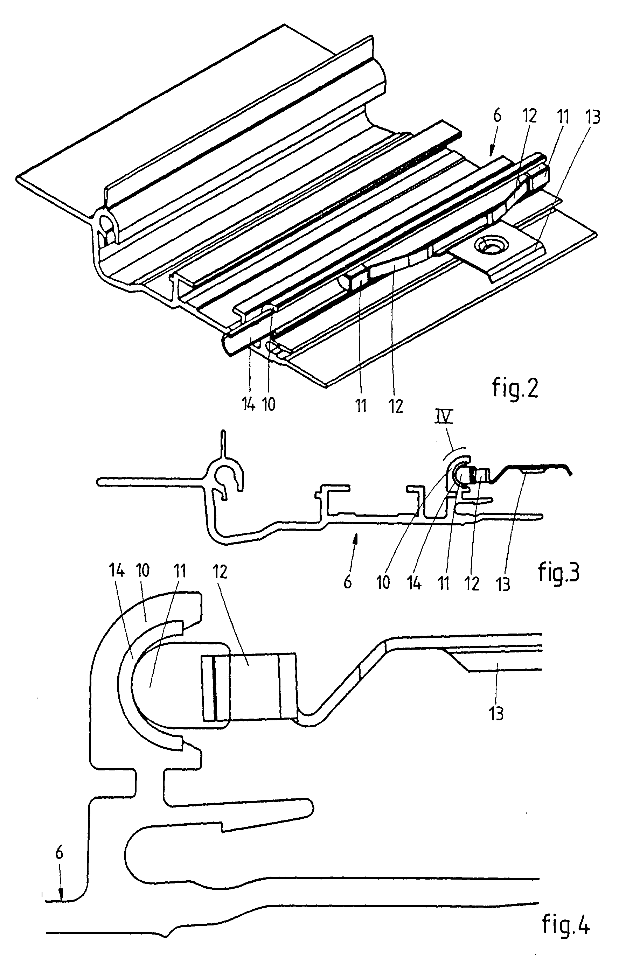

Figs. 2 - 4 illustrate on a larger scale the co-operation between the two sliding shoes 11 and the associated guide groove 10. The two sliding shoes 11 are joined into one unit, and they are each connected to a mounting element 13 by means of a spring member 12. Sliding shoes 11 are symmetrically disposed on either side of mounting element 13, and the spring members 12 are in the form of flat, non-twisted leaf spring, which allows a certain spring in a horizontal plane.

Figs. 2 - 4 furthermore show clearly that guide groove 10 has a cross-section in the form of a segment of a circle, so that said groove has at least a curved bottom. Groove 10 is bounded by a shell or insert piece 14, which is made of plastic material and which functions as a guiding surface in guide groove 10. In this manner a guide groove of plastic material can be obtained after all when using a guide rail 6 which is made of a metal, such as aluminium, which guide groove in this case mates with sliding shoes 11, which are likewise made of plastic material. A usable plastic having good sliding properties is for example POM containing 20% PTFE, although many other plastics can be used, such as PA and the like. The desired frictional resistance can be obtained by suitably selecting the material.

The cross-sectional shape of sliding shoe 11 on the side of guide groove 10 is adapted to the cross-sectional shape of guide groove 10, and that in such a manner that it is likewise curved, in particular in the form of a segment of a circle, the radius of curvature being maximally the same as that of the guiding surface of guide groove 10. In this case the radius of curvature of sliding shoe 11 is slightly smaller than that of insert piece 14 of guide groove 10. This shape of guide groove 10 and sliding shoes 11 causes the sliding shoes to be centred in vertical direction, preventing play between the guide grooves 10 and the associated sliding shoes 11, in particular if the sliding shoes 11 are spring-loaded in outward direction. The plastic guiding surface of the metal guide rail 6 provides an easily adjustable sliding force, which is furthermore constant along the length of guide groove 10.

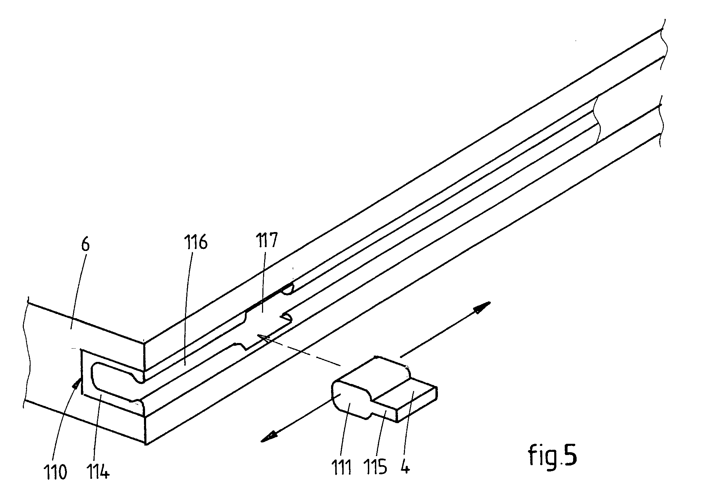

Fig. 5 shows a second embodiment of the open roof construction according to the invention, wherein the guide rail 6 and the guide groove 110 are shown very schematically. As the figure shows, an insert piece 114 of plastic material is present in guide groove 110 again. The difference with the preceding embodiment is that the internal cross-section of insert piece 114 on the side adjacent to sun screen 9 is smaller than in a part of insert piece 114 located further away from sun screen 9, where said insert piece 114 has a greater height. The external cross-sectional shape of the associated sliding shoe 111 is identical to the internal shape of insert piece 114, as a result of which a form-locked engagement is obtained when sliding shoe 111 is placed into guide groove 110, so that each sliding shoe 111 is retained in transverse direction in guide groove 10. In this case a narrow connecting part 115 between sliding shoe 111 and sun screen 9 extends through the narrow opening 116 of guide groove 110.

Preferably, the fitting of sliding shoes 111 into the guide grooves 110 takes place at a location outside the normal range of movement of sliding shoes 111, so that the sliding shoes cannot move out of guide grooves 110 at any time during normal use. One possibility is to insert the sliding shoes 111 from the head end of guide grooves 110, but it is also possible to provide the insert pieces 114 of guide grooves 110 with access openings 117 at a location beyond the normal range of movement of sliding shoes 111, so that the sliding shoes 111 can be inserted into guide grooves 110 in outward direction with respect to sun screen 9.

Also in this embodiment the bottom of guide groove 110 is curved, and the sliding shoes 111 exhibit a corresponding curvature on the side of the associated guide groove 110.

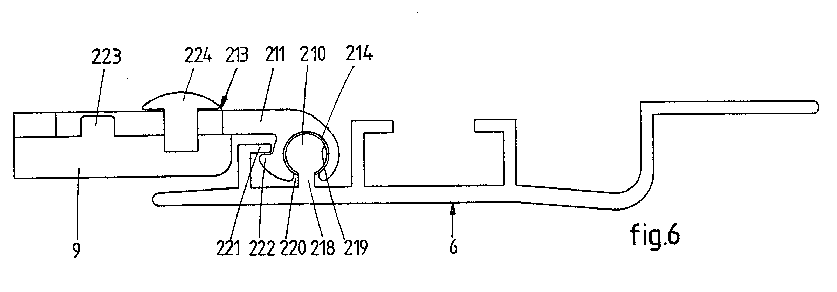

Fig. 6 shows a third embodiment of the open roof construction according to the invention, wherein the guideway for sun screen 9 is not in the form of a concave guide groove, but in the form of a convex guide rail 210. Seen in cross-sectional view, guide rail 210 is spherical with a small connecting part 218 to the other part of guide rail 6. Guide rail 210 is lined with a plastic layer or press-on piece 214, which forms the guiding surface of guide rail 210.

Sliding shoes 211 include a concave sliding surface 219. Sliding shoes 211 have a fist-shaped cross-section, as it were, by which sliding shoes 211 embrace the associated guide rails 210, wherein the internal diameter of the sliding surface 219 of the sliding shoes 211 fits the external guiding surface of guide rails 210. Each sliding shoe 211 is thereby positioned in such a manner that sliding shoe 211 embraces guide rail 210 from above, so that guide rail 210 extends into sliding shoe 211 in a direction at least substantially perpendicularly to the plane of sun screen 9. In use, the connecting part 218 of guide rail 210 is located near an entrance aperture of sliding shoe 211. Although sliding shoe 211 and guide rail 210 are in form-locked engagement with each other, an additional locking facility is provided to prevent said sliding shoe and said guide rail from becoming detached from each other. Guide rail 6 is to that end fitted with an extra locking flange 221, under which a shoulder 222 formed under sliding shoe 211 engages, and said shoulder comes into engagement with the associated locking flange 221 when sliding shoe 211 is loaded in the direction of detachment, therefore. Sliding shoes 211 can be mounted on the associated guide rails 210 by sliding them onto the head end of guide rail 210, or alternatively the guide rails 210 and/or the locking flange 221 may include a cut-away part for the purpose of fitting sliding shoe 211.

Sliding shoe 211 is attached to sun screen 9 by means of mounting element 213, wherein a guide 223 enables sliding shoe 211 and sun screen 9 to move in transverse direction relative to each other, and wherein sliding shoe 211 can be fixed in the desired position by means of a locking screw 224.

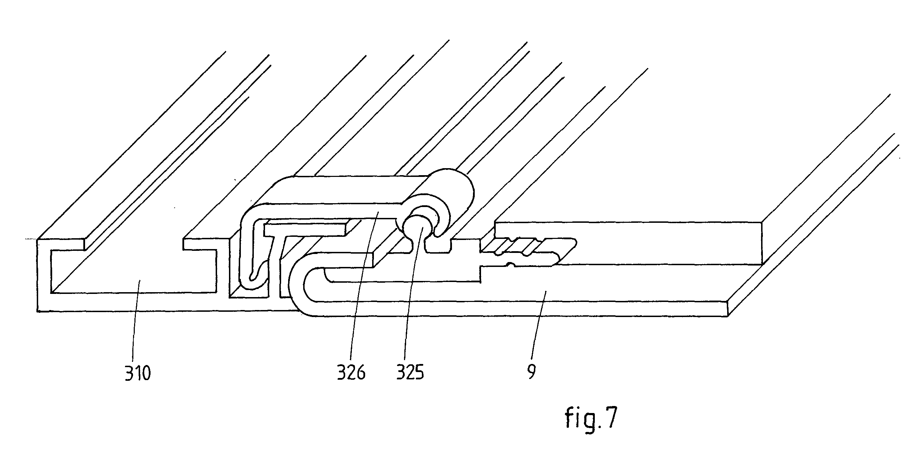

Fig. 7 shows part of a guide rail 310 and sun screen 9, with an additional facility being fitted, which could be combined, for example, with one of the preceding embodiments. Said facility consists of an additional plastic (for example PA) guideway 325 on each side edge of sun screen 9, and at least one and preferably a number of stationary plastic (for example PA) sliding shoes 326, which is attached, preferably snapped, to the associated stationary guide rail 310. The position of sliding shoes 326 and the length of guideways 325 are such that they interlock in all positions of sun screen 9. The purpose of said additional sliding shoes and guideways is to generate a controlled friction between the sun screen and the stationary part of the open roof construction.

From the foregoing it will be apparent that the invention provides an open roof construction for a vehicle which is remarkable for the simple manner of fitting the sliding shoes to the sun screen and of the sun screen in the guide rails, the rattle-free way in which the sun screen is mounted and the even frictional resistance on the sun screen. The shape of the sliding shoes and the guideways has thereby been selected so that the sliding shoes do not act as wedges (do not key in the horizontal and vertical planes, requiring only a simple spring construction (for example, only spring force in vertical direction) or none at all).

The invention is not restricted to the above-described embodiment as shown in the drawing, which can be varied in several ways without departing from the scope of the invention. Thus the invention can also be used with sliding shoes of closure means other than sun screens, such as covering or insulation screens, or independent closure elements, such as louvres or the like, which are used without an upper closure means.

## Claims

1. An open roof construction for a vehicle having an opening (2) in its fixed roof (1), comprising a stationary part (3, 6) to be fixed to the roof, a closure means (9) supported by said stationary part, which is slidably guided by means of sliding shoes (11; 111; 211) at the side edges with respect to guideways (10; 110; 210) on the stationary part (3, 6), **characterized in that** said guideways (10; 110; 210) are formed of a metal or the like, such as aluminium, which is provided with sliding surfaces of plastic material.

2. The open roof construction according to claim 1, wherein said guideways of plastic material are made up of a layer of plastic material, in particular an insert piece or a press-on piece (14; 114; 214), which has been applied to the surface of the guideway (10; 110; 210).

3. The open roof construction according to claim 1 or 2, wherein said guideways (210) are in the form of a convex section member, which is externally coated with a layer of plastic material (214) that functions as a guiding surface, whilst the sliding shoes (211) are each in the form of a concave element, which engages round the associated guideway.

4. The open roof construction according to claim 1 or 2, wherein said guideways (10; 110) are in the form of a concave section member, in particular a guide groove, comprising a plastic insert piece (14; 114) that functions as a guiding surface, whilst the sliding shoes (11; 111) engage in the associated guideway.

5. The open roof construction according to claim 4, wherein at least the bottom of said guideway (10) has a cross-section in the form of a segment of a circle having a specific radius of curvature, whilst the radius of curvature of the associated sliding shoe (11) is maximally the same.

6. An open roof construction for a vehicle having an opening (2) in its fixed roof (1), comprising a stationary part (3, 6) to be fixed to the roof, an adjustable, upper closure means (4) supported by said stationary part, which is adjustable between a closed position, in which it closes the roof opening, and an open position, in which it opens the roof opening at least partially, as well as a lower closure means (9), which is slidably guided at the side edges by means of guideways (10; 110; 210) and sliding shoes (11; 111; 211) formed on said stationary part and on the lower closure means, respectively, **characterized in that** said sliding shoes (111; 211) and said guideways (110; 210) are formed in such a manner that they are in form-locked engagement with each other within the normal range of movement of the sliding shoes, and that they can be moved into and out of engagement with each other outside the normal range of movement of the sliding shoes.

7. The open roof construction according to claim 6, wherein the guideways (110; 210) are cut away at a location outside the normal range of movement between sliding shoes (111; 211) and the guideways (110; 210), in order to move the sliding shoes and the guideways into and out of engagement with each other.

8. The open roof construction according to claim 6 or 7, wherein said guideways (210) are in the form of a convex section member comprising an external a guiding surface, whilst the sliding shoes (211) are each in the form of a concave element, which engages round the associated guideway.

9. The open roof construction according to claim 8, wherein the concave sliding shoes (211) include an entrance aperture (220) extending in the longitudinal direction of the closure means, through which a connecting part (218) extends, which connecting part connects the guideway (210) in question with a further connected part, wherein the connecting part (218) and the entrance aperture (220) extend at least substantially perpendicularly to the plane of the closure means (9).

10. The open roof construction according to claim 9, wherein the sliding shoes (211) are formed on the closure means (9) and the guideways (210) are formed on the stationary part, and wherein the sliding shoes (211) on one side of the closure means (9) and the associated guideway (210) can be removed from each other with force in one direction, whilst the stationary part (3, 6) includes locking flanges (221) disposed near the guideways, and the sliding shoes each include a shoulder (222), which comes into engagement with the associated locking flange when the sliding shoe is loaded in the aforesaid direction.

11. The open roof construction according to any one of the claims 6 - 10, wherein the guideways (310) are formed on the stationary part and the sliding shoes (311) are formed on the closure means (9), with the sliding shoes preferably being made of plastic material.

12. The open roof construction according to claim 6 or 7, wherein the guideways (110) are in the form of a concave section member comprising an internal guiding surface, in particular a guide groove, whilst the sliding shoes (111) engage in the associated guideway.

13. The open roof construction according to claim 12, wherein the guideway (10) has a cross-section in the form of a segment of a circle having a specific radius of curvature, whilst the associated sliding shoe (11; 111) has a sliding surface having maximally the same radius of curvature.

14. The open roof construction according to claim 12 or 13, wherein said guideway (110) is open in the direction of the closure means (9).

15. An open roof construction for a vehicle having an opening (2) in its fixed roof (1), comprising a stationary part (3, 6) to be fixed to the roof, an adjustable, upper closure means (4) supported by said stationary part, which is adjustable between a closed position, in which it closes the roof opening, and an open position, in which it releases the roof opening at least partially, as well as a lower closure means (9), which is slidably guided at the side edges in guide grooves (10; 110) in said stationary part, by means of sliding shoes (11; 111) which extend outwards with respect to said lower closure means, **characterized in that** at least the bottom of the guide grooves (10; 110) in the stationary part (3, 6) is curved, seen in cross-sectional view, whereas the sliding shoes (11; 111) exhibit a curvature adapted thereto on the side that faces towards the bottom of the associated guide groove, seen in cross-sectional view.

16. The open roof construction according to claim 15, wherein the guide groove (10; 110) has a cross-section in the form of a segment of a circle having a specific radius of curvature, whilst the associated sliding shoe (11; 111) has a sliding surface having maximally the same radius of curvature.

17. An open roof construction for a vehicle having an opening (2) in its fixed roof (1), comprising a stationary part (3, 6) to be fixed to the roof, an adjustable upper closure means (4) supported by said stationary part, which is adjustable between a closed position, in which it closes the roof opening, and an open position, in which it opens the roof opening at least partially, as well as a lower closure means (9), which is slidably guided at the side edges by means of guideways (310) and sliding shoes (3) formed on said stationary part and on the lower closure means, respectively, **characterized in that** an additional guideway (325) is formed on each side edge of the lower closure means, which guideway is in engagement with at least one stationary sliding shoe (326).

18. The open roof construction according to any one of the preceding claims, wherein said guideways (10; 110) include a guiding surface of plastic material and wherein said sliding shoes (11; 111) include a sliding surface of plastic material, said sliding shoes in particular being made of plastic material.

19. The open roof construction according to any one of the preceding claims, wherein said (lower) closure means (9) is a sun screen.
